# EUROPEAN PATENT SPECIFICATION

(11) **EP 3 491 300 B1**
(45) Date of publication and mention of the grant of the patent: **15.04.2026**
(21) Application number: 16801402.5
(22) Date of filing: 14.11.2016
(51) Int. Cl.: F24F 13/22

(54) **WATER HANDLING DEVICE**
WASSERBEHANDLUNGSSYSTEM
DISPOSITIF DE TRAITEMENT DE L'EAU

(30) Priority: 27.07.2016 WO PCT/EP2016/067927
(43) Date of publication of application: 05.06.2019
(73) Proprietor: Refco Manufacturing Ltd., 6285 Hitzkirch (CH)
(72) Inventor: POWELL, Sheb, 6315 Alosen (CH); ULRICH, Manfred, 6047 Kastanienbaum (CH); HOPKINS, Scott, Bricketwood St. Albans Hertfordshire AL2 3QN (GB); HERMANN, Urs, 6204 Sempach (CH)
(74) Representative: Liedtke & Partner Patentanwälte
(86) International application number: PCT/EP2016/077600
(87) International publication number: WO 2018/019395

(56) References cited:
- EP-A2- 1 707 820
- EP-A2- 1 760 412
- EP-A2- 2 085 711
- WO-A1-2014/156542
- DE-A1- 102013 225 065
- US-A- 5 853 643
- US-A1- 2005 284 167
- US-A1- 2011 283 730
- US-A1- 2012 325 343
- US-B1- 6 174 142

## Description

### TECHNICAL FIELD

The present invention is concerned with a water handling device, particularly condensate handling device such as condensate removal device.

### BACKGROUND

Condensate removal pumps are known that are designed to automatically remove condensate water from refrigerated cases, dehumidifiers, fan coils and air conditioning systems which are known, for example, from HVAC/R unit (with HVAC/R = Heating Ventilation Air Conditioning / Refrigeration ) appliances, e.g. from WO 2014/156542 A1.

Some such pumps are intended to be installed e.g. within a collection tray inside or under the equipment. In these cases, a water level, especially condensate water is measured to control operation of the pump via circuitry.

Other such pumps have a separate water sensor so that the sensor can be located within the HVAC/R unit or air conditioning unit whilst the pump can be positioned elsewhere. Control circuitry will automatically start the pump when condensate is detected and stop the pump when the condensate has been removed.

The known condensate removal pumps can be noisy, which may be due in some instances to hard casing or piping being located against external and internal structures or otherwise insufficient damping.

US 6 174 142 B1 describes a vibration limiting apparatus disposed on a generally flat floor of a body of water. The apparatus comprises a submersible pump for moving liquids and an elastomeric housing made of rubber disposed around said submersible pump. The elastomeric housing has at least four sides which are primarily planar. One of the sides intersects the others on three edges, wherein said elastomeric sides are sized to support the submersible pump on the flat floor. The submersible pump is adapted to be directly supported on the floor of said body of water on a selected one of said primarily planar sides. A frictional engagement between said elastomeric housing and the floor of the body of water maintains the submersible pump in a chosen orientation and location relative to the floor of the body of water. The elastomeric housing limits the vibrations generated by said submersible pump from transmission into said body of water.

DE 102013 225 065 A1 describes a pump housing made of plastic for a centrifugal pump. Said housing is provided with a first casing that has a first side facing the pumped medium and a second casing that has a second side facing the environment. The first casing and the second casing are both dimensionally stable and there is a space between the first casing and the second casing which is filled with a material.

It is an object of the present invention to provide a water handling device, particularly a condensate treatment device, which is able to provide for advanced damping. Further, it would be desirable to ensure a compact housing and integral housing for the water handling device. Yet further, it would be desirable to ensure efficient operation of the water handling device and method of manufacturing such a water handling device. Also, it would be desirable to provide an integrated, multi-functional water handling device.

### SUMMARY OF THE INVENTION

The objects of the present invention are solved by the subject-matter of the independent claims and the aspects described below; wherein further embodiments are incorporated in the dependent claims and the optional features described below.

In one aspect, there is provided a water handling device comprising: an outer shell housing; a water processing unit, comprising a pump unit with a pump, a pump unit housing and a motor; and an inner housing formed by plastic encapsulating material that fills the outer shell housing. The plastic encapsulating material secures internal components of the water handling device including the water processing unit to guard against vibrations and thus noise. The outer shell housing provides a structure for receiving the plastic encapsulating material during manufacturing.

The outer shell housing is made of vibration or pulsation damping material and/or include vibration damping elements.

The water processing unit may cause the water handling device to vibrate against a structure to which the water handling device is located or mounted. The outer shell housing provides an outer housing of damping material to reduce any noise caused by the vibrations or pulsations.

The fact that the pump unit housing is further covered by plastic encapsulating material covered by outer shell housing results in the combination of a housing for the pump unit including the pump and the motor and that housing itself being encapsulated. This combination allows for further vibration damping.

The exterior damping material should be more elastic, softer and/or more flexible than parts of the water processing unit housed by the outer shell housing. The damping material may be an elastomer such as rubber or silicone rubber or thermoplastic rubber or thermoplastic polyurethane. The outer shell housing is formed as an outer soft shell housing.

The outer shell housing may be in the form of an outer sleeve of the water processing unit.

The water handling device may comprise opposed end plates. The outer shell housing may extend from one end plate to the other. The outer shell housing may be positioned around the end plates. The outer shell housing may be form interlocked with each of the opposed end plates, such as by way of a protrusion and recess form fit, for example a dove-tail joint.

At least one of the end plates includes at least one of: a water inlet connector, a water outlet connector, a power connector, an electrical sensor control signal connector and/or an interface, for example a wireless interface and/or a wired interface, to connect at least one external device. The end plates can be made of a rigid, hard and/or inelastic material relative to the shell housing. In order to support the various connectors, and the associated connections, the end plates should be made of a structurally supporting material. Locating the outer soft shell housing around the structurally supporting material can ensure sufficient vibration, pulsation, and thus noise, damping.

The water processing unit comprises the pump unit. The pump unit comprises the motor, e.g. an electric motor, and the pump. The pump may comprise a reciprocating electromagnetic piston or plunger, a rotating impeller, diaphragm or other pumping device acting to pump the water. A transmission may be included between the motor and the pump. The pump unit may be a positive displacement pump unit such as a rotary type, linear type or reciprocating type. For example, a piston or plunger pump unit may be utilised. Such pumps tend to cause vibration and/or pulsations, which can be damped by the damping outer soft shell housing disclosed herein.

The water processing unit may additionally or alternatively comprise a filtration unit.

The water processing unit may additionally or alternatively comprise a water sensor unit. A combined filtration and water sensor unit may be included in the water processing unit as described further below.

The water sensing unit may comprise a water sensing unit housing defining a discharge reservoir for holding water to be discharged, a water level sensor for outputting signals indicative of water level in the discharge reservoir and a discharge tube for discharging water from the discharge reservoir.

The water sensing unit may comprise a filter disposed in the water sensing unit housing. The water sensing unit may comprise a sediment trap.

The water sensing unit may comprise a water sensing unit housing defining a succession of reservoirs including at least two of a filtration reservoir comprising a filter, a sediment trap reservoir, a collection reservoir and a discharge reservoir.

The water handling device may comprise a controller configured to receive signals from the water level sensor, to process the signals and to responsively output control signals to the pump unit. The controller may be embodied at least partly by a microprocessor included on the circuit board described below.

The water handling device may comprise a circuit board extending between the opposed end plates and connected thereto. Such an arrangement ensures a compact arrangement of the components. The circuit board includes electronic components such as for controlling at least one of: operation of the water handling device (such as on/off), controlling output of a status indication of the water handling device and/or the water processing unit (including a lighting device such as an LED, and/or a communication port such as a USB connector), processing signals from a sensor such as a water level sensor for example to drive a speed of the pump according to the water level. The circuit board may include a microprocessor as an electronic component.

The end plates may include grooves for receiving the circuit board therein.

The water processing unit may be mounted to the circuit board such as by soldering and/or mechanical fastening (e.g. screwed). The water processing unit comprising a pump unit and/or the water sensing unit may be mounted to the circuit board and is connected to the outside via tubes, interfaces and/or connectors which are integral part of the outer shell housing.

The water handling device may comprise an inner housing made of encapsulating material that is rigid, hard, inelastic and/or elastic, soft relative to the softer outer shell housing. The inner housing is formed out of a plastic, such as polypropylene (PP), polyamide (PA), polybutylentherephtalat (PBT). The inner housing may be is the form of a potting which is soft, but more rigid than the outer soft shell housing.

The encapsulating material may encapsulate any of the above described components of the water handling device housed by the outer shell housing, including the circuit board and the water processing unit. The encapsulating material may encapsulate the pump unit and/or the water sensing unit. The inner housing may be moulded or cast in the outer shell housing.

The encapsulating material of the inner housing fills the outer shell housing. For example, the encapsulating material fills the outer housing from one end plate to the other. In fact, the end plates and the outer shell housing may define bounds of a mould or cast used for moulding or casting the inner housing from the encapsulating material.

The encapsulating material may be formed from resin or other plastic moulding material. The plastic moulding material may be thermally, UV, chemical additive or otherwise curable.

The water handling device may comprise a cover, lid or cap for covering an opening in the outer shell housing. The opening may be used for pouring of the encapsulating material into the outer shell housing.

The water handling device may include vibration and/or pulsation damping elements protruding outwardly relative to the outer shell housing. The damping elements may comprise damping elements extending around the water handling device. The damping elements may comprise ribs extending around the water handling device. The damping elements may comprise discontinuous or continuous elements extending around the water handling device. The damping elements may comprise an arrangement of soft bumps, ribs, splines for example. The vibration damping elements protrude so as to form points of contact against a structure to which the water handling device is to be mounted, to further improve vibration, pulsation, isolation, and thus noise, damping. The vibration damping elements may be located on the outer shell housing or the end plates. The vibration damping elements may be integrally formed with the outer shell housing. The vibration damping elements may be made of elastomeric material. The vibration damping elements may be made of soft, elastic and/or flexible material as described above with respect to the outer shell housing.

The water handling device may comprise at least one of an inlet pipe and an outlet pipe having an arrangement of ribs and channels forming an outer surface thereof. The ribs, points and channels may be circumferentially distributed. The ribs and channel may be formed by a star shaped cross-section of the pipe. The pipe is a flexible pipe, which may be made of elastomeric material such as rubber. At least one of an inlet pipe and an outlet pipe may function to connect the water handling device to a source of an external unit, such as a condensate water source.

In another aspect, there is provided a method of manufacturing a water handling device comprising a water processing unit, an inner housing and an outer shell housing, the method comprising: providing a water processing unit, comprising a pump unit with a pump, a pump unit housing and a motor, disposed within the outer shell housing, pouring encapsulating material in the outer shell housing and over the water processing unit, thereby forming the inner housing. Such a method allows the inner housing to be manufactured efficiently and components to be properly encapsulated to reduce or further reduce internal vibrations. Further, the outer shell housing can be made of vibration damping material to further reduce vibration and the associated noise.

The outer shell housing thus forms a mould or cast for casting or moulding the inner housing using the encapsulating material as has been described further above. The features described above for the water handling device are applicable to the method of manufacture.

The method may comprise mounting the water processing unit to a circuit board.

The method may comprise connecting the outer shell housing to opposed end plates such as by way of an interlocking form fit. The end plates and the outer shell housing may form boundaries for a cast or mould into which the plastic encapsulating material is poured.

The method may comprise using a cover or lid to close an opening into the outer shell housing.

The encapsulating material may be a curable material and the method may comprise curing the encapsulating material after the pouring step. Curing may be performed by heat, UV or chemical additive (e.g. vulcanization), for example. The encapsulating material may be a thermosetting resin, RTV or silicone rubber for example.

In yet another aspect, there is provided a water sensing unit comprising a water sensing unit housing defining a discharge reservoir for holding water to be discharged, a water level sensor for outputting signals indicative of water level in the discharge reservoir, a discharge tube for discharging water from the discharge reservoir. Having the water level sensor and the discharge tube arranged in the same reservoir provides for a compact arrangement.

The discharge tube may extend deeper into the discharge reservoir (relative to the direction of water level decrease as water is discharged therefrom) than the water level sensor. In this way, an inlet end of the discharge tube is always below a level of an end of the water level sensor used for sensing so that the water level sensor can reliably sense when water level is sufficient to pump without risk of pumping air. That is, if the water level sensor can sense water in the discharge reservoir, the relative location of an inlet end of the discharge tube ensures that the inlet end is submerged. Similarly, there is sufficient clearance to ensure that the pump unit is stopped before sucking air after water level goes below a sensing end of the water level sensor.

The water sensing unit may comprise a filter disposed in the water sensing unit housing. The water sensing unit may comprise a debris or sediment trap disposed in the water sensing unit housing.

The water sensing unit may comprise a water sensing unit housing defining a succession of reservoirs including at least two of a filtration reservoir comprising a first reservoir, e.g. a sediment trap reservoir, and a second reservoir, e.g. a filter reservoir, further a collection reservoir and a discharge reservoir. The succession of reservoirs may be ordered with respect to water flow: a sediment trap reservoir, a filtration reservoir comprising a filter, a collection reservoir and a discharge reservoir. Each reservoir overflows into the next reservoir in sequence.

The reservoirs may be included in a common chamber defined by the water sensing unit housing.

The water sensing unit may comprise an inlet to allow flow of water into the water sensing unit, particularly a chamber defined thereby.

The water sensing unit housing may define a collection reservoir and the discharge reservoir and a divider there between. The collection reservoir overflows into the discharge reservoir. Such an arrangement has been found to provide a swashing or overflowing function between the reservoirs, which can positively impact on filtration and water level sensing by the water sensor. Further, the divider displaces the water to ensure a compact design.

The above benefits can be accentuated when the divider is formed by ramped (linear or otherwise) surfaces extending to a peak of the divider and having a discharge reservoir side and a collection reservoir side.

In another aspect, a water handling device is provided comprising the water sensing unit and a pump unit connected to the discharge tube for discharging water from the discharge reservoir. The water handling device may further comprise a controller configured such that operation of the pump unit is responsive to water level signal sensed by the water level sensor. The water handling device of this aspect may include any of the features of the water handling device described above.

In another aspect, a system of the water handling device and an external unit that produces condensate water is provided, whereby the water processing unit is arranged to process the condensate water. In particular, the water processing unit may be configured for performing at least one of the functions of condensate filtration, condensate removal and condensate level sensing. The external unit may be an air conditioning unit, refrigeration unit, a dehumidifier, a fan coil, etc. The water handling device may be connected to receive condensate water from a condensate collection tray of the external unit.

### BRIEF DESCRIPTION OF THE FIGURES

The exemplary embodiments will hereinafter be described in conjunction with the following drawing figures, wherein like numerals denote like elements.
Fig. 1 shows a water handling device during a step of manufacture thereof.
Fig. 2A and 2B show a cross-section of the water handling device.
Figs. 3A and 3B show schematic views of a water processing unit.
Fig. 4 shows a cross-section of a water sensing unit.
Fig. 5 shows a water level sensor.

### DETAILED DESCRIPTION

The following detailed description is merely exemplary in nature and is not intended to limit the application and uses.

In the following description, there is disclosed an embodiment of a water handling device. The water handling device is disclosed in the context of use with an air conditioning unit, particularly comprising a water processing unit to pump condensate water from a condensate collection tray of the air condition unit. It can be envisaged that alternative condensate producing units could be used with the present water handling device such as a refrigeration unit, a dehumidifier, a fan coil, etc. Further other water handling contexts are imagined, such as aquariums, coffee machines, industrial water management, and other water processing functions than condensate removal are envisaged,

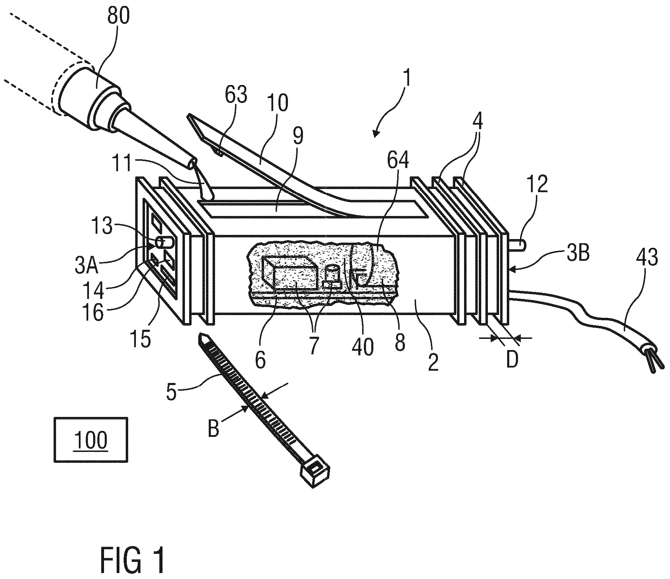

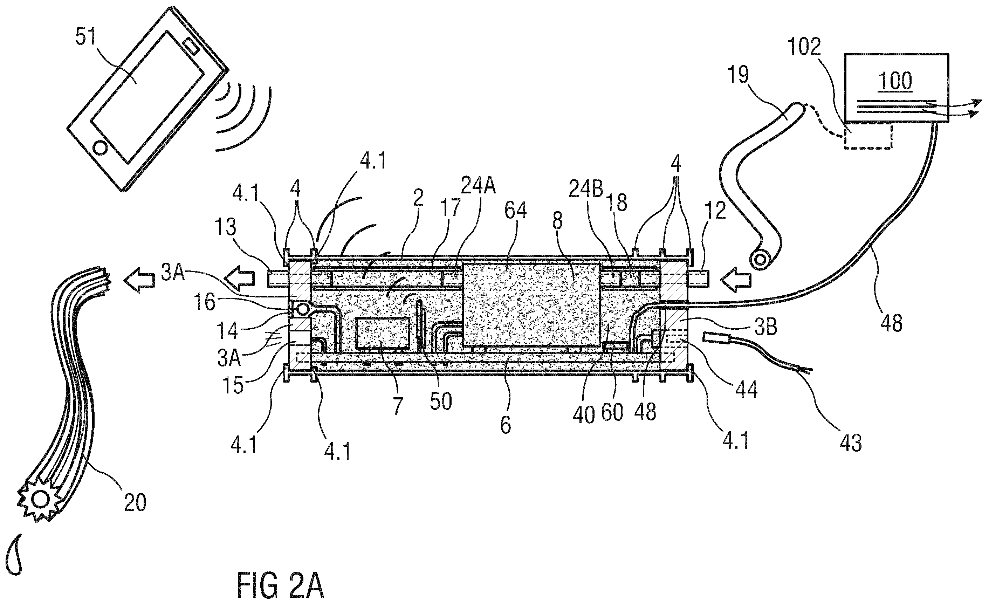

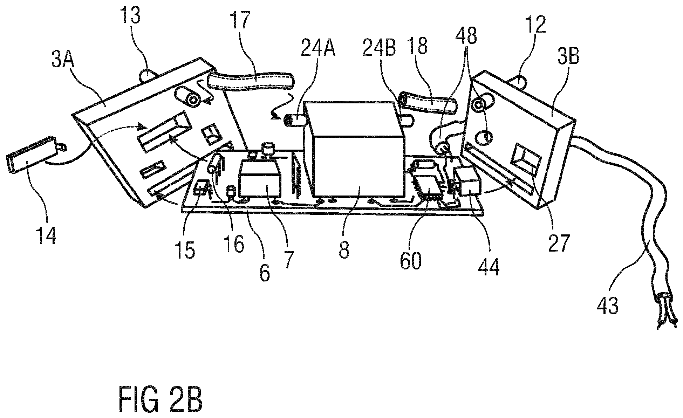

Referring to **Figs. 1** and **2A****, 2B** a water handling device 1 is shown comprising a water processing unit 8 and an outer shell housing 2 of vibration and/or pulsation damping material forming an outer housing of the water handling device 1. In the shown embodiment, the water handling device 1 takes on an elongate form, which is embodied in this instance by a rectangular cuboid shape. The water handling device 1 comprises opposed end plates 3A, 3B at each longitudinal end of the water handling device 1 forming end faces of the water handling device 1.

A circuit board 6 extends between the opposed end plates 3A, 3B and is connected thereto. The circuit board 6 is interference fit with the end plates 3A, 3B, for example. Such an interference fit may be achieved by opposed end portions being fitted into correspondingly dimensioned grooves (not shown) of the end plates 3A, 3B. The circuit board 6 includes electronic components mounted thereon, as described below, in addition to the water processing unit 8.

The circuit board 6 is adapted to control and/or monitor the water processing unit 8 and/or a component thereof.

The water handling device 1 comprises an inner housing 40 made of encapsulating material 11 or which is made by another tooling process. The inner housing 40 is shown schematically and partially cut away to allow internal components to be seen. The encapsulating material 11 encapsulates internal components of the water handling device 1 housed by the outer shell housing 2, including the circuit board 6, inner surfaces of the end plates 3A, 3B and the water processing unit 8.

The encapsulating material 11 of the inner housing 40 fills the outer shell housing 2 from one end plate 3A to the other end plate 3B. In fact, the end plates 3A, 3B and the outer shell housing 2 define bounds of a mould or cast used for moulding or casting the inner housing 40 from the encapsulating material 11, as will be described further below with respect to manufacturing.

In the embodiment of Fig. 1, the water handling device 1 comprises a cover 10, for example a lid or a cap, for covering an opening 9 in the outer shell housing 2. The opening 9 may be used for pouring of the encapsulating material 11 into the outer shell housing 2 during manufacturing. The cover 10 is shown as a strip of material that has connecting elements 63 (for example tabs or slots) for interference fit connection with the outer shell housing 2 and/or the end plates 3A, 3B. The interference fit connection may be by way of cooperating tabs and slots, for example.

The cover 10 has may latches, gaskets and/or sealing which are provided to seal the outer shell housing 2, for example during manufacturing of the inner housing 40 during casting of the encapsulating material 11 as well as in the final assembled state of the water handling device 1.

The outer shell housing 2 is positioned around the end plates 3A, 3B. The outer shell housing 2 is mechanically connected to each end plate 3A, 3B. The mechanical connection may be in the form of a cooperating groove and rib 4.1 that form an interlocking fit at each end plate 3A, 3B, see for example figure 2A. For example, the end plates 3A, 3B could include a groove extending therearound and the outer shell housing 2 could include an internally projecting and cooperating rib 4.1 that engage each other. One exemplary such mechanical connection would be a dovetail joint.

As shown in Figs. 1 and 2A, 2B, the water handling device 1 includes damping elements 4, in particular vibration and/or pulsation damping elements 4 protruding outwardly relative to the outer shell housing 2. The damping elements 4 are further adapted to provide reinforcement and/ stiffness. The vibration and/or pulsation damping elements 4 comprise ribs 4.1 fully encircling the water handling device 1.

The damping elements 4 are located on the outer shell housing 2. In this particular embodiment, the vibration and/or pulsation damping elements 4 are integrally formed with the outer shell housing 2. The vibration and/or pulsation damping elements 4 are made of elastomeric material. The vibration and/or pulsation damping elements 4 are arranged with some vibration and/or pulsation damping elements 4 at one end of the water handling device 1 and some vibration and/or pulsation damping elements 4 at the opposite end of the water handling device 1.

At least one vibration and/or pulsation damping element 4 is arranged so as to surround each end plate 3A, 3B. The vibration and/or pulsation damping elements 4 are spaced from each other along the water handling device 1 by a distance D sufficient to receive a connecting and/or support element, for example a cable tie 5 or a cable therebetween. A cable tie 5 can be used at each end to secure the water handling device 1 to an external structure, such as for associating the water handling device 1 with an air conditioning unit 100.

In an alternative possibility to that shown in Figs. 1 and 2A, 2B, the damping elements 4 may comprise discontinuous or continuous elements extending around the water handling device 1. The damping elements 4 may comprise an arrangement of bumps, ribs, points or splines for example.

Continuing to refer to Figs. 1 and 2A, 2B, the end plates 3A, 3B provide structural support for interfacing elements for the water handling device 1 including electrical, electromagnetic connections and/or water connections. The interfacing elements at each of the end plates 3A, 3B are formed for example as wireless interfaces, in particular as a radio interface, such as a bluetooth connector, and/or an electromagnetic interface, such as lights, LEDs, infrared connector, and/or a wired interfaces, in particular plug connections, switches. The interfacing elements are adapted to communicate at least status information, operating information, monitoring information, to a user of the water handling device 1 and/or to an external device 100, in particular to a fluid or condensate producing unit, e.g. an air conditioning unit, or a remote control device, or a remote readout-device.

A first end plate 3A located at one end of the water handling device 1 includes at least an outer water outlet connector 13, a lid 14 and an indicator light 15 (e.g. a light emitting diode, LED) and/or a replaceable fuse 16. A second end plate 3B at the other one end of the water handling device 1 (an end located closer to the water processing unit8) includes at least an outer water inlet connector 12, an electrical control signal connector 48 and an opening 27 for a power connector 44 for a power cable 43. The interface elements or connectors 12, 13, 44, 48 and the indicator light 15 could be otherwise distributed between the end plates 3A, 3B.

According to figure 2A, the outer water inlet connector 12 allows an inlet pipe 19 to be connected thereto for communicating water to the water processing unit 8 and an outlet pipe 20 can be connected to the outer water outlet connector 13 for discharge water having passed through the water processing unit 8. The inlet pipe 19 may be connected to the external device 100, e.g. a condensate or fluid producing unit, for example the air conditioning unit, or to a sensor unit which is connected via a second tube to the condensate producing unit, such as an air conditioning unit, and the water handling device 1.

For simplicity and for the sake of clarity, the external device 100 is further shortly mentioned as condensate producing unit 100. The external device 100 may be also formed as any other fluid supply or producing unit, in particular a water supply unit, e.g. of a coffee machine or an aquarium or a process plant or a plant for setting a dose of a fluid for a process unit.

The invention is for example described for use in a heating ventilation air conditioning refrigeration unit (HVAC/R unit) but not limited to this appliance. The external device 100 is hence further mentioned as a condensate producing unit 100.

In particular, the water processing unit 8 is may connected to a condensate collection tray 102 of the condensate producing unit 100 which is for example an air conditioning or air cooling unit. The outlet pipe 20 may connect to an external drain.

The indicator light 15 allows a status of the water treatment device 1 to be communicated to a user, such as a status of the water processing unit 8. The status may be communicated by different colours and/or different blinking patterns/rates.

As best seen from figure 2A, the water handling device 1 further comprises a processor 60 which may be coupled with an electrical control signal connector 48 allowing the water treatment or handling device 1 to communicate with the external device 100 such as an air conditioning unit. The electrical control signal connector 48 is adapted to communicate with the external device 100 via a wireless or wired interface, e.g. via Bluetooth interface, a wlan-interface, an infrared-interface, a bus system, e.g. a data bus system. The electrical control signal connector 48 may communicate an alarm signal, for example, so that one or more features of the external unit or device 100 are shut down or otherwise adjusted in response to the alarm.

The power cable 43 is connected to power various electronic components on the circuit board 6 including the water processing unit 8.

In an additional or alternative embodiment to the indicator light 15, a wireless communication device 50 can be provided to communicate status information to an external communication device 51 such as a server, a user computer, a smartphone, a tablet, etc. The data and/or information such as alarms, pump status, run history, manufacturer data, information discussed further below could also be communicated wireless.

Furthermore, for monitoring and analysing the water handling device 1, in particular different operating modes, the water handling device 1 may comprise a memory unit which is for example a part of the circuit board 6 as a separate component or as a part of the processor 60. History data, e.g. alarms, status data, may be stored in the memory unit. For analysing and creating a history, the circuit board 6 and the components thereof are assisted by for example by a not-shown battery or a so-called UPS unit (uninterruptible power supply). The circuit board 6 as well as the battery or UPS unit are assisted by an on-board battery supported clock.

The circuit board 6 has mounted thereon a processor 60, a relay 7, the wireless communication device 50, a power module (not shown) connected with the power connector 44, a memory (not shown) and the water processing unit 8.

The power module is for suitably modulating power from the power cable 43 for use with the various electronic components such as the water processing unit 8. For example, the power module may allow for use of the water handling device 1 with different mains voltages such as 240V and 110V. The processor 60 is configured to provide control signals for controlling the various electronic components including the wireless communication device 50, the warning indicator light 15, the water processing unit 8, the power module and the electrical control signal connector 48.

The processor 60 is further configured to receive input signals from these electronic components, to process them and responsively provide the control signals. The memory may include at least one computer program stored thereon for directing the processing by the processor 60. The processor 60 may be a microprocessor.

The relay 7 is configured to provide an alarm signal to the external device 100 via the electrical control signal connector48. The replaceable fuse 16 is included in the first end plate 3A, for example covered by a lid 14. The replaceable fuse 16 is further electronically interconnected onto the circuit board 6 between the electrical control signal connector 48 and the relay 7, for protecting the external device 100 as well as protecting the water handling device 1 itself.

Referring to Figs. 2A, 2B, the inlet and outlet pipes 19, 20 are shown in two alternative forms. Although only an inlet pipe 19 is shown adjacent the outer water inlet connector 12, it will be appreciated that a corresponding outlet pipe 20 is provided for the outer water outlet connector 13. The inlet pipe 19 has a smooth outer surface.

The outlet pipe 20 has longitudinally extending ribs 4.1 and/or channels distributed circumferentially about the outlet pipe 20 to provide a star shaped form, which can further damp vibrations, pulsations and noise.

In particular, the inlet pipe 19 and/or the outlet pip 20 may have a profiled outer surface, e.g. ribs 4.1 and/or grooves, channels to minimize surface contact vibrations, pulsations or noises.

The inner water processing unit 8 includes an inner water outlet connector 24A and an inner water inlet connector 24B that are respectively connected to the outer water inlet connector 12 and the outer water outlet connector 13 of the water handling device 1 via internal tubes 17, 18. It can also be envisaged that at least one of the inner water inlet and outlet connectors 24A, 24B of the water processing unit 8 extends through the end plate 3A, 3B to provide at least one of the outer water inlet and outlet connectors 12, 13 of the water handling device 1, thereby obviating the need for at least one of the internal tubes 17, 18 and at least one of the separate external water connectors 12, 13 of the water handling device 1.

Referring to Fig. 1, a method of manufacture of the water handling device 1 can be appreciated. The method comprises mounting the end plates 3A, 3b to the circuit board 6. The method further comprises connecting the outer shell housing 2, which may be preformed or formed in place around each of the opposed end plates 3A, 3B such as by way of the interlocking form fit described previously. The method further comprises pouring plastic encapsulating material 11, such as resin, in the outer shell housing 2 through the opening 9 and over the various internal components, thereby forming the inner housing 40 when the encapsulating material 11 is cured (such as ultraviolet, chemical additive or thermal curing).

The encapsulating material 11 may be poured through a moulding nozzle 80 as shown in figure 1.

The encapsulating material 11 may encapsulate the water processing unit 8 (or at least a housing 64 thereof), the circuit board 6, internal water transfer tubes and connectors 24A, 24B, 17, 18, inner faces of the end plates 3A, 3B, the relay 7, the processor 60, an interior surface of the outer shell housing 2 of the water handling device 1, etc. The outer shell housing 2 is filled with the encapsulating material 11 such that all components interior thereto are appropriately encapsulated. The cover 10 is applied to cover the opening 9. The cover 10 may be applied to cover the opening 9 before or after curing.

According to the present embodiment, a highly encapsulated water handling device 1 is provided, which ensures security of internal components and structural integrity. Further, the outer shell housing 2 and the damping elements 4 ensure that any vibrations and/or pulsations made by operation of the water processing unit 8 are sufficiently damped to avoid noise or pulsation or vibration when the water handling device 1 is mounted against an external structure.

In particular, the outer shell housing 2 is integrated with the more rigid, inelastic and hard inner housing 40 formed by the cured encapsulating material 11. Alternatively, the inner housing 40 may be made of an encapsulating material 11 that is elastic relative to the outer shell housing 2 but the encapsulating material 11 is such elastic dimensioned that the inner housing 40 is stiffer than the outer shell housing 2.

This, in combination with contact points to the external structure being provided by the damping elements 4, ensures thorough vibration and/or pulsation damping. The end plates 3A, 3B may also necessarily be made of more rigid, inelastic and hard material than the outer shell housing 2 in order to provide structural support for the water and electric connectors. Since the outer shell housing 2 encompasses the inner housing 40 and the end plates 3A, 3B extensive vibration and/or pulsation damping is provided.

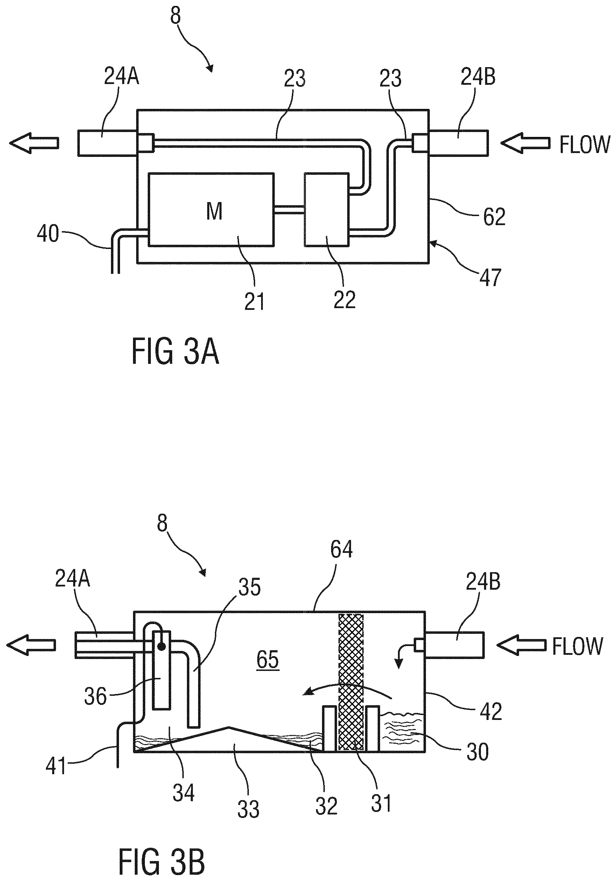

In the following, there are disclosed examples for the water processing unit 8 with respect to Figs. **3A, 3B****,** **4** **and** **5****.** Fig. 3A shows a pump unit 47 as a first example included in the water processing unit 8 and Fig. 3B shows a water sensing unit 42 as a second example included in the water processing unit 8. In an embodiment, the pump unit 47 and the water sensing unit 42 are combined to form at least part of the water processing unit 8.

Turning to Fig. 3A, the water processing unit 8 comprises a pump unit 47. The pump unit 47 comprises a pump unit housing 62 having an electric motor 21, a pump 22 and pump tubing 23. The pump 22 may comprise a rotatable impeller, a reciprocating rod or a reciprocating plunger or other water displacer. Pump movement of the pump 22 is powered by the electric motor 21, particularly through a transmission and a rotating shaft of the motor 21. The pump tubing 23 connects the pump 22 to the inlet and outlet connectors 24A, 24B of the water processing unit 8. The pump 22 serves to discharge water through the inner water outlet connector 24A of the water processing unit 8 via the pump tubing 23. The pump unit housing 62 is itself encapsulated by the inner housing 40 of the water handling device 1.

The pump unit 47 includes at least one electrical connection 90 that is connected to the circuit board 6 so that, for example, control signals can be received under the direction of the processor 60. Such control signals may direct a pumping level such as from 2 to 40 litres per hour. The processor 60 may be programmed through the memory (not shown) with settings of the pump unit 47 such as maximum pumping level and power rating of the pump unit 47. These setting may be pre-programmed or selectable by users by switches which are part of the water handling device 1. For example, the water handling device 1 comprises interfaces for setting and/or updating parameters and/or set of parameters via wireless and/or wired interfaces, e.g. from the external device 100 and/or from a walk-by device or a remote device.

In one embodiment the water handling device 1, in particular the processor 60, provides pump settings between 2 liters to 45 liters per hour due to varying produced amounts of water of from HVAC/R units with energy ratings of 1,5 kW to 35 kW. Alternatively, the settings may be provided, in particular received via one of the interfaces, for example by an wireless mobile communication, from the external device 100, for example from the air conditioning unit or.

In particular, by supplying a specific software the user could set the power and an adequate pump setting that best match the HVAC/R system requirements made by e.g. a software of the water handling device 1, e.g. of the processor 60, or a computer program, app running on the external device 100, e.g. a mobile device. Such settings will provide a reduced maximum pump rating which reduce noise, vibration and/or pulsation in general.

In another embodiment the water handling device 1, e.g. a specific computer program or software of the processor 60, assists with a learning mode, during such mode the flow of water is analysed and pump starts are limited or optimized per hour. Every start of the pump 22 could be made in a soft start, so a rising speed ramp up of the pump 22 could reduce also noise, vibration and pulsation.

In another embodiment, the water handling device 1, e.g. a specific computer program or a software of the processor 60, starts the pump 22 not on any sensed water level, as there is a minimum waiting time programmed or a minimum water level on which the pump 22 is starting. Anyhow it could be programmed to run the pump 22 once a day or once a week to keep the water handling device 1 in a dry state.

Turning now to Figs. 3B, 4 and 5, the water processing unit 8 comprises a water sensing unit 42, which may be additional or alternative to the pump unit 47 of Fig. 3A.

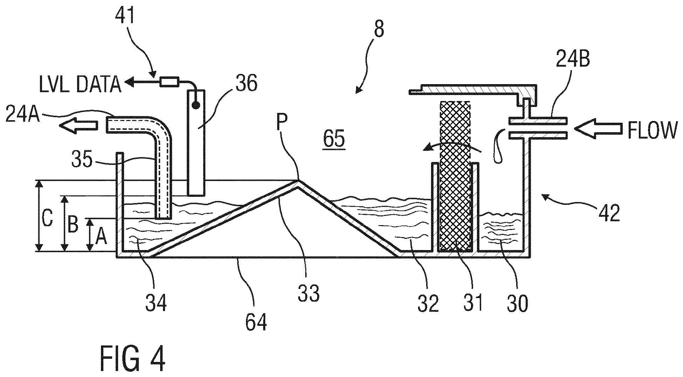

The water sensing unit 42 comprises a housing 64, further mentioned water sensing unit housing 64 defining a discharge reservoir 34 for holding water to be discharged, a water level sensor 36 for outputting signals indicative of water level in the discharge reservoir 34 and a discharge tube 35 for discharging water from the discharge reservoir 34. The discharge tube 35 is connected to the water outlet 24A of the of the water processing unit 8. Note that the water sensing unit housing 64 is only partly shown in Fig. 4.

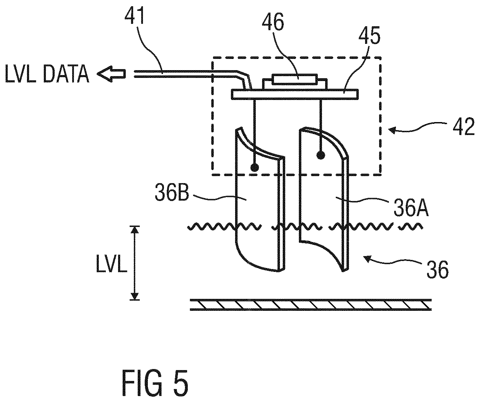

The discharge tube 35 includes a distal end opening that is located at a level B in the discharge reservoir 34 deeper than a level B of a distal end of sensing electrodes 36A, 36B (discussed further below with respect to Fig. 5) of the water level sensor 36. The relative location of the distal end of the sensing electrodes 36A, 36B and a distal end opening of the discharge tube 35 is shown in Fig. 4 rather than the more schematic Fig. 3B.

The water sensing unit housing 64 provides a water tight housing defining a main chamber 65 having a water inlet and a water outlet provided through the inlet and outlet connectors 24A, 24B of the water processing unit 8. The main chamber 65 includes a succession of reservoirs for holding water including, in order of water flow, a sediment trap reservoir 30, a filtration reservoir comprising a filter 31, a collection reservoir 32 and the discharge reservoir 34. The reservoirs, in particular the sediment trap reservoir 30, the collection reservoir 32 and the discharge reservoir 34, are divided from each other such that a preceding reservoir, e.g. reservoirs 30,31, 32 must overflow into the next reservoir 32 or 34 in order for flow to proceed. The sediment trap reservoir 30 traps coarser particulates therein, whilst the filter 31 prevents finer debris from proceeding to the collection and discharge reservoirs 32, 34.

The figures show a divider 33 between the discharge reservoir 34 and the collection reservoir 32. The divider 33 has a peaked structure with a discharge reservoir side and a collection reservoir side and a peak P therebetween, which can minimise a volume of the discharge reservoir 34 and provide swashing overflow from the collection reservoir 32 to the discharge reservoir 34, which can serve to improve water level sensing. The peak P is provided at a height C higher than the previously described levels A and B defined by water in the discharge reservoir 34. The water level in the collection reservoir 32 must surpass the level C in order to overflow into the discharge reservoir 34.

The discharge tube 35 and the inner water outlet connector 24A are connected to a pumping source to allow discharge (suction) of water from the discharge reservoir 34. The pumping source can be an external pump 22 or the pump unit 47 described above with respect to Fig. 3B. In the case of using the pump unit 47 as the pumping source, the water processing unit 8 has an integrated filter 31, water level sensor 36 and pump unit 47, and controller therefor, in a compact, quiet and robust water handling device 1. In the following, we will take the case where the pump unit 47 is used as the pumping source.

The water level sensor 36 is useful to determine a water level in the discharge reservoir 34 that is level A or above so that a distal end opening of the discharge tube 35 is submerged in water, thereby ensuring that air is not sucked (which is noisy and represents inefficient operation). In particular, the water level sensor 36 is able to sense water in the discharge reservoir 34 at a level B or above until level C, where level B is spaced above level A. The water level sensor 36 outputs signals indicative of the sensed water level, which are used to control activation speed and deactivation of the pumping source, particularly the pump unit 47.

The output signals may be a digital, binary signal, representing either water sensed or not sensed using different logical states, or a signal representing a varying height of water level in the discharge reservoir 34 that allows water height to be quantitatively measured.

The output signals from the water level sensor 36 can be processed by a processor 46 of the water sensing unit 42 as described below with respect to Fig. 5 or by a processor 60 of the water handling device 1 or by an external processor of an external device 100. Any one or more of these processors can return control signals for operating the pump unit 47 depending upon the water level in the discharge reservoir 34.

In particular, the pump unit 47 is activated when the water level sensor 36 senses water and is inactivated when the water level sensor 36 does not sense water. Further, when the sensed signals represent a varying water level height, the one or more processors may adjust a pumping rate of the pump unit 47 proportionally. Further, the one or more processors may be configured to determine an alarm condition through output signals from the water level sensor 36 when water level does not decrease even when the pump unit 47 is operating- in such condition the processor 60 of the water handling device 1 may shut off the air conditioning unit 100, e.g. such shut off line may be protected by a fuse 16, as shown on Fig. 2A or 2B. Other alarm conditions can be determined based on water level itself and also the rate at which the water level increases or decreases relative to the water level sensor 36. Such an alarm condition can result in an alarm signal being output through the electrical control signal connector 48 and/or the wireless communication device 50, via the relay 7, as has been mentioned above.

A particular example of the water level sensor 36 is shown in Fig. 5. The water level sensor 36 comprises first and second electrodes 36A, 36B, which are electrically connected to control circuitry including a processor 46 of the water sensing unit 42. The control circuitry and processer 46 are mounted to a further circuit board 45. The control circuitry and processor 46 may measure voltage, current or resistance between the first and second electrodes 36A, 36B to provide sensed signals indicative of water level. The processor 46 of the water sensing unit 42 is configured for reading the sensed signals obtained from the first and second electrodes 36A, 36B and processing the read signals to output signals on the output line 41. The processing may involve digitizing the sensed signals from the first and second electrodes 36A, 36B. The output line 41 may be connected to the processor 60 of the water treatment or handling device 1 through the circuit board 6.

In a particular application, and with reference to Fig. 2, the water handling device 1 is used to treat condensate water from the external device 100, e.g. from a condensate water producing unit such as an air conditioning unit. The outer inlet pipe 19 is connected to a condensate outlet of the air condition unit 100.

In the case of the water processing unit 8 being the water sensing unit 42, incoming water will pass the trap reservoir 30, the filter 31 and the collection reservoir 32 to flow over the peak P of the divider 33 into the discharge reservoir 34. In the case of rising water level at the water level sensor 36 arranged within the discharge reservoir 34, the level will be communicated to a pump unit 47, to be sucked out the water at least up to level C.

In the case of the water processing unit 8 being the pump unit 47, the pump unit 47 operates to pump the fluid, e.g. condensate water, from the external device 100, e.g. from an air conditioning unit, such as the condensate collection tray 102, to a drain. In the case of the water processing unit 8 comprising the water sensing unit 42 and the pump unit 47, the pump unit 47 is operated in an efficient way so as to be responsive to water level sensed by the water sensing unit 42 and thus water level in, for example, a condensate collection tray 102 of the air conditioning unit 100.

In a particular application the water processing unit 8 consists out of combination of a pump unit 47 and a sensor unit 42.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as defined in the claims.

### Reference list

- 1: water handling device
- 2: outer shell housing
- 3A, 3B: end plates
- 4: damping element
- 4.1: rib
- 5: cable tie
- 6: circuit board
- 7: relay
- 8: water processing unit
- 9: opening
- 10: cover
- 11: encapsulating material
- 12: outer water inlet connector
- 13: outer water outlet connector
- 14: lid
- 15: indicator light
- 16: replaceable fuse
- 17: internal tube
- 18: internal tube
- 19: inlet pipe
- 20: outlet pipe
- 21: motor
- 22: pump
- 23: pump tubing
- 24A: inner water outlet connector
- 24B: inner water inlet connector
- 27: Power connector opening
- 30: sediment trap reservoir
- 31: filter
- 32: collection reservoir
- 33: divider
- 34: discharge reservoir
- 35: discharge tube
- 36: water level sensor
- 40: inner housing
- 41: output line
- 42: water sensing unit
- 43: power cable
- 44: power connector
- 45: Water sensor circuit board
- 46: processor
- 47: pump unit
- 48: electrical control signal connector
- 50: wireless communication device
- 51: external communication device
- 60: processor
- 62: pump unit housing
- 63: connecting elements
- 64: water sensing unit housing
- 65: main chamber
- 80: Encapsulant moulding nozzle
- 90: Electrical Connector
- 100: external device, e.g. condensate producing unit of an air conditioning unit
- 102: condensate collection tray

- A-C: level
- D: distance
- P: peak

- 41: output line
- 42: water sensing unit
- 43: power cable
- 44: power connector
- 45: Water sensor circuit board
- 46: processor
- 47: pump unit
- 48: electrical control signal connector
- 50: wireless communication device
- 51: external communication device
- 60: processor
- 62: pump unit housing
- 63: connecting elements
- 64: water sensing unit housing
- 65: main chamber
- 80: Encapsulant moulding nozzle
- 90: Electrical Connector
- 100: external device, e.g. condensate producing unit of an air conditioning unit
- 102: condensate collection tray

- A-C: level
- D: distance
- P: peak

## Claims

1. **A water handling device** (1), comprising:
a water processing unit (8), comprising a pump unit (47) with a pump (22), a pump unit housing (62) and a motor (21),
an outer housing and
an inner housing (40),
wherein the outer housing is formed by an outer shell housing (2) of vibration or pulsation damping material,
wherein the inner housing (40) is formed by plastic encapsulating material (11) that fills the outer shell housing (2), and
wherein the water processing unit (8) is arranged in the outer shell housing (2) and is encapsulated by the plastic encapsulating material (11).

2. The water handling device (1) according to claim 1, comprising opposed end plates (3A, 3B), wherein at least one of the end plates (3A, 3B) includes at least one of an outer water inlet connector (12), an outer water outlet connector (13), a power cable (43), an electrical control signal connector (48) or an opening (27) for a replaceable fuse (16), and comprising a circuit board (6) extending between the opposed end plates (3A, 3B) and connected thereto.

3. The water handling device (1) according to claim 1 or 2, comprising the inner housing (40) made of encapsulating material (11) that is rigid, hard and/or elastic relative to the outer shell housing (2).

4. The water handling device (1) according to claim 3, wherein the encapsulating material (11) has been moulded or cast in a mould or cast formed by at least the outer shell housing (2) to form the inner housing (40).

5. The water handling device (1) according to anyone of the preceding claims, including damping elements (4) protruding outwardly relative to the outer shell housing (2).

6. The water handling device (1) according to anyone of the preceding claims, comprising at least one of an inlet pipe (19) and an outlet pipe (20) having an arrangement of ribs 4.1 and/or channels forming an outer surface thereof.

7. The water handling device (1) according to claim 1, wherein the water processing unit (8) comprises a water sensing unit (42).

8. The water handling device (1) according to claim 7, wherein the water sensing unit (42) comprises
a water sensing unit housing (64) defining a discharge reservoir (34) for holding water to be discharged;
a water level sensor (36) for outputting signals indicative of water level in the discharge reservoir (34); and
a discharge tube (35) for discharging water from the discharge reservoir (34), wherein the discharge tube (35) extends deeper into the discharge reservoir (34) than the water level sensor (36).

9. The water handling device (1) according to claim 8,
- comprising a filter (31) disposed in the water sensing unit housing (64) and comprising a sediment trap reservoir (30) disposed in the water sensing unit housing (64) and/or
- the water sensing unit housing (64) defines a collection reservoir (32) and the discharge reservoir (34) and a divider (33) there between, wherein the divider (33) is formed by ramped surfaces extending to a peak (P) of the divider (33) and having a discharge reservoir side and a collection reservoir side.

10. The water handling (1) device according to anyone of the preceding claims, comprising an interface, in particular a wireless interface, in particular a radio interface and/or an electromagnetic interface, and/or a wired interface, in particular secured connection or a relay connection, wherein
- the interface is adapted to control, in particular to set and/or update at least one parameter or set of parameters of at least one component of the water handling device (1), in particular a pump (22) and/or a motor (21) and/or a processing unit (46, 60); and/or
- an external device (100) is connectable and/or controlled directly or indirectly via at least one of the interfaces, in particular via a relays and/or fuse due to at least one condition sensed by the water handling device (1) and/or a component thereof.

11. The water handling device (1) according to anyone of the preceding claims, comprising a communication device, connectors, indicator devices and/or setting devices, in particular at least one of lights, LEDs, switches, connectors for wired connection to communication devices or wireless devices for wireless connection to communication devices, to communicate a status information to an user of the water handling device (1) or to allow at least one of settings and updating at least one of the water handling device (1), pump (22), motor (21) and pump device.

12. A method of manufacturing a water handling device (1) comprising a water processing unit (8), an inner housing (40) and an outer shell housing (2), the method comprising:
providing a water processing unit (8) comprising a pump unit (47) with a pump (22), a pump unit housing (62) and a motor (21), disposed within the outer shell housing (2), and
pouring plastic encapsulating material (11) in the outer shell housing (2) and over the water processing unit (8), thereby forming the damping inner housing (40).

## Patentansprüche

1. Wasserbehandlungsvorrichtung (1), die Folgendes umfasst:
eine Wasseraufbereitungseinheit (8), die eine Pumpeneinheit (47) mit einer Pumpe (22), einem Pumpeneinheitsgehäuse (62) und einem Motor (21) umfasst,
ein äußeres Gehäuse und
ein inneres Gehäuse (40),
wobei das äußere Gehäuse durch ein Außenschalengehäuse (2) aus Vibrations- oder Pulsationsdämpfungsmaterial gebildet ist,
wobei das innere Gehäuse (40) durch ein Kunststoffverkapselungsmaterial (11) gebildet ist, das das Außenschalengehäuse (2) füllt, und
wobei die Wasseraufbereitungseinheit (8) in dem Außenschalengehäuse (2) angeordnet ist und durch das Kunststoffverkapselungsmaterial (11) eingekapselt ist.

2. Wasserbehandlungsvorrichtung (1) nach Anspruch 1, die gegenüberliegende Endplatten (3A, 3B) umfasst, wobei mindestens eine der Endplatten (3A, 3B) einen äußeren Wassereinlassverbinder (12) und/oder einen äußeren Wasserauslassverbinder (13) und/oder ein Stromversorgungskabel (43) und/oder einen elektrischen Steuersignalverbinder (48) und/oder eine Öffnung (27) für eine austauschbare Sicherung (16) umfasst, und umfassend eine Leiterplatte (6), die sich zwischen den gegenüberliegenden Endplatten (3A, 3B) erstreckt und damit verbunden ist.

3. Wasserbehandlungsvorrichtung (1) nach Anspruch 1 oder 2, umfassend das innere Gehäuse (40) aus einem Verkapselungsmaterial (11), das gegenüber dem Außenschalengehäuse (2) starr, hart und/oder elastisch ist.

4. Wasserbehandlungsvorrichtung (1) nach Anspruch 3, wobei das Verkapselungsmaterial (11) in einer Form oder einer Gussform geformt oder gegossen wurde, die durch mindestens das Außenschalengehäuse (2) gebildet ist, um das innere Gehäuse (40) zu bilden.

5. Wasserbehandlungsvorrichtung (1) nach einem der vorhergehenden Ansprüche, die Dämpfungselemente (4) umfasst, die relativ zu dem Außenschalengehäuse (2) nach außen vorstehen.

6. Wasserbehandlungsvorrichtung (1) nach einem der vorhergehenden Ansprüche, umfassend mindestens eines aus einem Einlassrohr (19) und einem Auslassrohr (20) mit einer Anordnung von Rippen 4.1 und/oder Kanälen, die eine Außenfläche davon bilden.

7. Wasserbehandlungsvorrichtung (1) nach Anspruch 1, wobei die Wasseraufbereitungseinheit (8) eine Wassererfassungseinheit (42) umfasst.

8. Wasserbehandlungsvorrichtung (1) nach Anspruch 7, wobei die Wassererfassungseinheit (42) Folgendes umfasst
ein Wassererfassungseinheitsgehäuse (64), das einen Ablassbehälter (34) zum Aufnehmen von abzulassendem Wasser definiert;
einen Wasserstandssensor (36) zum Ausgeben von Signalen, die indikativ für einen Wasserstand in dem Ablassbehälter (34) sind; und
ein Ablassrohr (35) zum Ablassen von Wasser aus dem Ablassbehälter (34), wobei sich das Ablassrohr (35) tiefer in den Ablassbehälter (34) als der Wasserstandssensor (36) erstreckt.

9. Wasserbehandlungsvorrichtung (1) nach Anspruch 8,
- umfassend einen Filter (31), der in dem Gehäuse (64) der Wassererfassungseinheit angeordnet ist und einen Sedimentfallenbehälter (30) umfasst, der in dem Wassererfassungseinheitsgehäuse (64) angeordnet ist, und/oder
- wobei das Wassererfassungseinheitsgehäuse (64) einen Sammelbehälter (32) und den Ablassbehälter (34) und einen dazwischen befindlichen Teiler (33) definiert, wobei der Teiler (33) durch Rampenflächen gebildet ist, die sich bis zu einer Spitze (P) des Teilers (33) erstrecken und eine Ablassbehälterseite und eine Sammelbehälterseite aufweisen.

10. Wasserbehandlungsvorrichtung (1) nach einem der vorhergehenden Ansprüche, umfassend eine Schnittstelle, insbesondere eine drahtlose Schnittstelle, insbesondere eine Funkschnittstelle und/oder eine elektromagnetische Schnittstelle, und/oder eine drahtgebundene Schnittstelle, insbesondere eine gesicherte Verbindung oder eine Relaisverbindung, wobei
- die Schnittstelle angepasst ist zum Steuern, insbesondere Einstellen und/oder Aktualisieren, mindestens eines Parameters oder einer Menge von Parametern mindestens einer Komponente der Wasserbehandlungsvorrichtung (1), insbesondere einer Pumpe (22) und/oder eines Motors (21) und/oder einer Aufbereitungseinheit (46, 60); und/oder
- eine externe Vorrichtung (100) über mindestens eine der Schnittstellen direkt oder indirekt verbindbar und/oder anhand eines von der Wasserbehandlungsvorrichtung (1) und/oder einer Komponente davon erfassten Zustandes steuerbar ist, insbesondere über ein Relais und/oder eine Sicherung.

11. Wasserbehandlungsvorrichtung (1) nach einem der vorhergehenden Ansprüche, umfassend eine Kommunikationsvorrichtung, Verbinder, Anzeigevorrichtungen und/oder Einstellvorrichtungen, insbesondere zumindest eines aus Leuchten, LEDs, Schaltern, Verbindern für eine drahtgebundene Verbindung mit Kommunikationsvorrichtungen oder drahtlose Vorrichtungen für eine drahtlose Verbindung mit Kommunikationsvorrichtungen, um eine Statusinformation an einen Benutzer der Wasserbehandlungsvorrichtung (1) zu kommunizieren oder um Einstellungen und/oder Aktualisieren von mindestens einem aus der Wasserbehandlungsvorrichtung (1), der Pumpe (22), dem Motor (21) und der Pumpenvorrichtung zu ermöglichen.

12. Verfahren zum Herstellen einer Wasserbehandlungsvorrichtung (1), die eine Wasseraufbereitungseinheit (8), ein inneres Gehäuse (40) und ein Außenschalengehäuse (2) umfasst, wobei das Verfahren Folgendes umfasst:
Bereitstellen einer Wasseraufbereitungseinheit (8), umfassend eine Pumpeneinheit (47) mit einer Pumpe (22), einem Pumpeneinheitsgehäuse (62) und einem Motor (21), die innerhalb des Außenschalengehäuses (2) angeordnet sind, und
Gießen von Kunststoffverkapselungsmaterial (11) in das Außenschalengehäuse (2) und über die Wasseraufbereitungseinheit (8), wodurch das dämpfende innere Gehäuse (40) gebildet wird.

## Revendications

1. Dispositif de gestion d'eau (1), comprenant :
une unité de traitement de l'eau (8), comportant une unité de pompage (47) avec une pompe (22), un boîtier d'unité de pompage (62) et un moteur (21),
un boîtier externe et
un boîtier interne (40),
le boîtier externe étant formé par un boîtier d'enveloppe externe (2) en matériau amortissant les vibrations ou les pulsations,
le boîtier interne (40) étant formé par un matériau d'encapsulation plastique (11) remplissant le boîtier d'enveloppe externe (2), et
l'unité de traitement de l'eau (8) étant disposée dans le boîtier d'enveloppe externe (2) et étant encapsulée dans le matériau d'encapsulation plastique (11).

2. Dispositif de gestion d'eau (1) selon la revendication 1, comprenant des plaques d'extrémité opposées (3A, 3B), dans lequel au moins l'une des plaques d'extrémité (3A, 3B) comprend au moins l'un d'un connecteur d'entrée d'eau externe (12), un connecteur de sortie d'eau externe (13), un câble d'alimentation (43), un connecteur de signal de commande électrique (48) ou une ouverture (27) pour un fusible remplaçable (16), et comprenant une carte de circuit imprimé (6) s'étendant entre les plaques d'extrémité opposées (3A, 3B) et connectée à celles-ci.

3. Dispositif de gestion d'eau (1) selon la revendication 1 ou 2, comprenant le boîtier interne (40) constitué d'un matériau d'encapsulation (11) qui est rigide, dur et/ou élastique par rapport au boîtier d'enveloppe externe (2).

4. Dispositif de gestion d'eau (1) selon la revendication 3, dans lequel le matériau d'encapsulation (11) a été moulé ou coulé dans un moule ou une empreinte formé par au moins le boîtier d'enveloppe externe (2) pour former le boîtier interne (40).

5. Dispositif de gestion d'eau (1) selon l'une quelconque des revendications précédentes, comprenant des éléments d'amortissement (4) faisant saillie vers l'extérieur par rapport au boîtier d'enveloppe externe (2).

6. Dispositif de gestion d'eau (1) selon l'une quelconque des revendications précédentes, comprenant au moins un élément parmi un tuyau d'entrée (19) et un tuyau de sortie (20) ayant un agencement de nervures 4.1 et/ou de canaux formant une surface externe de celui-ci.

7. Dispositif de gestion d'eau (1) selon la revendication 1, dans lequel l'unité de traitement d'eau (8) comprend une unité de détection d'eau (42).

8. Dispositif de gestion d'eau (1) selon la revendication 7, dans lequel l'unité de traitement d'eau (42) comprend
un boîtier d'unité de détection d'eau (64) définissant un réservoir d'évacuation (34) pour retenir l'eau à évacuer ;
un capteur de niveau (36) destiné à émettre des signaux indiquant le niveau d'eau dans le réservoir d'évacuation (34) ; et
un tuyau d'évacuation (35) pour l'évacuation de l'eau du réservoir d'évacuation (34), le tube d'évacuation (35) s'étendant plus profondément dans le réservoir d'évacuation (34) que le capteur de niveau d'eau (36).

9. Dispositif de gestion d'eau (1) selon la revendication 8,
- comprenant un filtre (31) disposé dans le boîtier d'unité de détection d'eau (64) et comprenant un réservoir de piège à sédiments (30) disposé dans le boîtier d'unité de détection d'eau (64) et/ou
- le boîtier d'unité de détection d'eau (64) définissant un réservoir de collecte (32) et le réservoir d'évacuation (34) et un séparateur (33) entre eux, le séparateur (33) étant formé par des surfaces inclinées s'étendant jusqu'à un sommet (P) du séparateur (33) et ayant un côté réservoir d'évacuation et un côté réservoir de collecte.

10. Dispositif de gestion d'eau (1) selon l'une quelconque des revendications précédentes, comprenant une interface, en particulier une interface sans fil, en particulier une interface radio et/ou une interface électromagnétique, et/ou une interface filaire, en particulier une connexion sécurisée ou une connexion relais, où
- l'interface est adaptée pour commander, notamment pour régler et/ou mettre à jour au moins un paramètre ou un ensemble de paramètres d'au moins un composant du dispositif de gestion d'eau (1), notamment une pompe (22) et/ou un moteur (21) et/ou une unité de traitement (46, 60) ; et/ou
- un dispositif externe (100) est connectable et/ou commandé directement ou indirectement via au moins l'une des interfaces, notamment via un relais et/ou fusible en raison d'au moins une condition captée par le dispositif de gestion d'eau (1) et/ou l'un de ses composants.

11. Dispositif de gestion d'eau (1) selon l'une quelconque des revendications précédentes, comprenant un dispositif de communication, des connecteurs, des dispositifs indicateurs et/ou des dispositifs de réglage, en particulier au moins un élément parmi des lampes, des LED, des commutateurs, des connecteurs pour connexion filaire à des dispositifs de communication ou des dispositifs sans fil pour connexion sans fil à des dispositifs de communication, pour communiquer des information d'état à un utilisateur du dispositif de gestion d'eau (1) ou pour permettre au moins l'un parmi des réglages et une mise à jour d'au moins l'un des éléments parmi le dispositif de gestion d'eau (1), la pompe (22), le moteur (21) et le dispositif de pompe.

12. Procédé de fabrication d'un dispositif de gestion d'eau (1) comprenant une unité de traitement de l'eau (8), un boîtier interne (40) et un boîtier d'enveloppe externe (2), le procédé comprenant :
la mise à disposition d'une unité de traitement d'eau (8) comprenant une unité de pompage (47) avec une pompe (22), un boîtier d'unité de pompage (62) et un moteur (21), disposés à l'intérieur du boîtier d'enveloppe externe (2), et
le versement d'un matériau d'encapsulation plastique (11) dans le boîtier d'enveloppe externe (2) et par-dessus l'unité de traitement de l'eau (8), en formant ainsi le boîtier interne d'amortissement (40).
